# FASCICULE DE BREVET EUROPEEN

(11) **EP 3 353 847 B1**
(45) Date de publication et mention de la délivrance du brevet: **09.10.2019**
(21) Numéro de dépôt: 16766568.6
(22) Date de dépôt: 19.09.2016
(51) Int. Cl.: H01M 12/08, H01M 10/0569, H01M 10/052, H01M 10/0568

(54) **BATTERIE MÉTAL/OXYGÈNE**
METALL/SAUERSTOFF-BATTERIE
METAL/OXYGEN BATTERY

(30) Priorité: 21.09.2015 FR 1558852
(43) Date de publication de la demande: 01.08.2018
(73) Titulaire: Commissariat à l'Énergie Atomique et aux Énergies Alternatives, 75015 Paris (FR)
(72) Inventeur: SOLAN, Sébastien, 38170 Seyssinet-Pariset (FR); PICARD, Lionel, 38170 Seyssinet-Pariset (FR)
(74) Mandataire: Nony
(86) Numéro de dépôt international: PCT/EP2016/072110
(87) Numéro de publication internationale: WO 2017/050672

(56) Documents cités:
- WO-A1-2012/146525
- WO-A1-2014/133466
- JP-A- 2015 109 243
- US-A1- 2012 058 402

## Description

La présente invention concerne le domaine des batteries métal-oxygène et vise plus particulièrement à proposer une nouvelle batterie de ce type.

Les batteries métal-oxygène, encore dénommées batteries métal-air, sont une catégorie de cellules électrochimiques dans lesquelles l'oxygène, issu de l'environnement ambiant, est réduit en surface de la cathode. La réduction de l'oxygène forme un ion oxyde ou peroxyde qui réagit avec une espèce métallique cationique.

Des batteries métal-oxygène ont ainsi été développées avec du Fe, Zn, Al, Mg, Ca et du Li.

L'oxygène est donc le matériau actif de l'électrode positive. Il est un oxydant puissant, léger et disponible partout « gratuitement ». De plus, suivant la conception du système, il est possible de ne pas le stocker initialement dans la batterie, c'est-à-dire de le prélever directement dans l'atmosphère *via* l'utilisation d'une cathode à air. Ces systèmes possèdent donc théoriquement une grande densité d'énergie massique.

Afin de conserver ces avantages liés à l'utilisation de l'oxygène, le matériau de l'électrode négative d'une batterie métal-air doit posséder plusieurs caractéristiques. Sa masse molaire doit être faible et la charge portée par ses espèces (cations) oxydées doit être grande pour offrir un maximum de densité de capacité (par unité de poids ou volume). Il doit être un réducteur puissant pour fournir une tension importante aux bornes de la batterie et ainsi une grande densité énergétique. Enfin, il doit être abondant et de faible coût pour des raisons économiques évidentes. Les éléments répondant à ces exigences sont notamment les sels de lithium, aluminium, magnésium, calcium, fer et de zinc, le lithium apparaissant toutefois comme le meilleur choix pour le développement de systèmes électrochimiques à forte densité d'énergie massique.

Pour des raisons évidentes, l'optimisation des performances des batteries métal-oxygène, et en particulier Li/O₂, relève d'un objectif permanent.

Un des axes d'amélioration serait notamment d'augmenter significativement la solubilité de l'oxygène dans l'électrolyte de ces batteries.

Pour des raisons évidentes, l'électrolyte représente un des composants essentiels des batteries. Il contribue à la circulation des composants électro-actifs du système batterie. Le sel support dissous dans le solvant doit assurer la meilleure conductivité ionique possible. Quant au milieu solvant associé, il doit satisfaire à plusieurs exigences. En particulier, l'électrolyte doit posséder une faible viscosité, demeurer liquide sur une large gamme de température, être doté d'une constante diélectrique élevée afin de favoriser la dissociation du sel de lithium, être électro-chimiquement stable sur un large domaine d'électro-activité et bien entendu être apte à solubiliser une grande quantité d'oxygène.

D'une manière générale, aucun solvant ne permet à lui seul d'atteindre toutes ces propriétés et il est souvent nécessaire de mélanger plusieurs solvants pour répondre à l'ensemble de ces attentes.

Comme milieux solvants électrolytes usuellement retenus pour cet usage peuvent être tout particulièrement cités les solvants polaires aprotiques tels que les solvants carbonatés, comme par exemple le carbonate d'éthylène, le carbonate de propylène, le carbonate de diméthyle, le carbonate de dipropyle et le carbonate d'éthylméthyle.

Récemment, le document US 2010 0266907 a fait état de l'aptitude des solvants perfluorocarbonés à dissoudre l'oxygène et donc de leur intérêt à titre d'électrolyte de cathode de pile métal/ion pour augmenter le potentiel de cathode.

Les documents JP 2015 109243 A, WO 2014/133466 A1, WO 2012/146525 A1 et US 2012/058402 A1 divulguent également des compositions d'électrolyte pour batteries métal-oxygène, comprenant un sel de lithium et un solvant fluoré, tel qu'un perfluoroalcane, un composé éther partiellement fluoré, un carbonate partiellement fluoré ou un ester partiellement fluoré.

Malheureusement, ce type de solvant ne s'avère pas compatible avec la dissolution simultanée de sels de lithium. C'est en particulier le cas des sels Li₂CoPO₄F, LiNiO₆Mn₁,₄O₄ ou encore LiCoPO₄, particulièrement intéressants, dans la mesure où ils permettent notamment d'accéder à des potentiels plus élevés, c'est-à-dire de l'ordre de 4,3 à 4,4 V, sans requérir l'usage d'additifs, et également des sels de type lithium graphite et en particulier de silicium qui s'avèrent pour leur part, compatibles avec une utilisation à bas potentiel, c'est-à-dire inférieur à 0,001 V.

En conséquence, il demeure un besoin de milieux électrolytes pour batterie métal-oxygène aptes à manifester une bonne solubilité, d'une part, de l'oxygène et, d'autre part, des sels supports associés, en particulier des sels de lithium.

La présente invention a précisément pour objectif de proposer une nouvelle famille de batteries métal-oxygène caractérisée notamment par le fait qu'elle possède un milieu liquide électrolyte répondant aux attentes précitées.

Ainsi, l'électrolyte considéré selon l'invention est avantageusement utilisable à des potentiels s'étendant de 0,01 à 4,4 V.

L'électrolyte considéré selon l'invention est apte à solubiliser pour l'essentiel l'ensemble des sels supports actuellement utilisés dans les batteries métal-oxygène.

Enfin, il possède une bonne solubilité à l'égard de l'oxygène.

Ainsi, la présente invention vise une batterie métal-oxygène comprenant, à titre d'électrolyte, un milieu électrolyte monophasique comprenant au moins :
- un sel support de métal alcalin ou alcalino-terreux, de préférence un sel de lithium,
- un solvant fluorocarboné possédant une solubilité pour l'oxygène au moins égale à 30 % v/v,
- de 10 à 60 % en volume d'au moins un agent solubilisant fluoré, distinct dudit solvant fluorocarboné, choisi parmi les composés hydrocarbonés mono-, poly- et per-fluorés, saturés, insaturés et/ou aromatiques, linéaires, ramifiés et/ou cycliques, ayant de 4 à 18 atomes de carbone, dont l'enchaînement carboné est porteur d'au moins un motif terminal polaire et peut être interrompu par un ou plusieurs hétéroatomes choisi(s) parmi les atomes d'oxygène et de soufre, et les radicaux -N(R¹)-, -B(R¹)- et -P(R¹R²)- avec R¹ et R², identiques ou différents, représentant un atome d'hydrogène ou un radical alkyle en C₁ à C₄, et
- un solvant carbonaté.

Au sens de l'invention, un solvant fluorocarboné désigne un composé fluide à température ambiante et pression atmosphérique, et dont le squelette carboné comprend au moins un, de préférence plusieurs, atomes de fluor, voire est avantageusement perfluoré.

Au sens de l'invention, un motif terminal polaire désigne un groupement fonctionnel en extrémité libre sur le squelette carboné de l'agent solubilisant, c'est-à-dire en extrémité terminale de la chaine carbonée principale ou en extrémité d'un radical carboné constituant une ramification de cette chaîne si présent, ce motif étant de nature à conférer à l'agent solubilisant une affinité pour le sel support de métal alcalin ou alcalino-terreux associé et qui, par nature, est polaire.

Avantageusement, le milieu électrolyte considéré selon l'invention est non-aqueux.

De manière surprenante, les inventeurs ont découvert que l'association d'un solvant fluorocarboné et d'un agent solubilisant conformes à l'invention permet d'accéder à un milieu électrolyte, de solubilité satisfaisante à l'égard de l'oxygène et du ou des sels supports associés et manifestant avantageusement une stabilité électrochimique significativement accrue.

La large fenêtre de stabilité électrochimique est particulièrement intéressante en matière de gain de performances.

Quant à la capacité de ce milieu à dissoudre le ou les sels supports, elle est nécessaire au bon fonctionnement de la batterie correspondante.

Cette aptitude est notamment reflétée par le fait que le milieu liquide électrolyte est monophasique.

Au sens de l'invention, un milieu monophasique est un milieu dont l'examen microscopique ne permet pas de discerner plus d'une phase.

En d'autres termes, le sel support est présent à l'état de soluté dans le milieu électrolyte de l'invention. A ce titre, le milieu électrolyte selon l'invention est différent d'une dispersion. Le sel support n'y est pas présent, en tout ou partie, à l'état particulaire.

Cette solubilité peut avoir nécessité un chauffage du milieu électrolyte selon l'invention pour l'obtenir. En revanche, cet état de soluté atteint sous chauffage perdure au refroidissement du milieu électrolyte à la température ambiante.

Au sens de l'invention, une température ambiante est une température de 20 °C+/- 2 °C.

De même, l'agent solubilisant, le solvant fluorocarboné et le solvant carbonaté selon l'invention manifestent en présence du sel support une affinité l'un pour l'autre. Le milieu électrolyte selon l'invention n'est avantageusement pas sujet à un phénomène de démixtion susceptible de séparer le solvant fluoré, de l'agent solubilisant et/ou du solvant carbonaté.

Comme énoncé précédemment, le ou les solvants fluorés considérés selon l'invention possèdent une solubilité à l'égard de l'oxygène au moins égale à 30 % v/v.

Cette solubilité est appréciée à température ambiante et pression atmosphérique. Elle peut notamment être appréciée par la méthode de WINKLER consistant à saturer en oxygène un milieu liquide et à évaluer la différence de volume du milieu liquide.

D'autres caractéristiques, variantes de l'invention ressortiront mieux à la lecture de la description, des exemples et figures qui vont suivre, donnés à titre illustratif et non limitatif de l'invention.

Dans la suite du texte, les expressions « compris entre ... et ... », « allant de ... à ... » et « variant de ... à ... » sont équivalentes et entendent signifier que les bornes sont incluses, sauf mention contraire.

Sauf indication contraire, l'expression « comportant/comprenant un(e) » doit être comprise comme « comportant/comprenant au moins un(e) ».

### SOLVANT FLUOROCARBONE

Au sens de l'invention, un solvant fluorocarboné peut comprendre des atomes d'hydrogène, d'oxygène, de soufre, d'azote ou de phosphore.

Selon une variante particulière, il est dénué d'atome d'oxygène, de soufre, d'azote ou de phosphore.

En particulier, le solvant fluorocarboné convenant à l'invention comprend un squelette hydrocarboné substitué par un et, de préférence, plusieurs atomes de fluor et, le cas échéant, substitué par une fonction hydroxyle.

Il est avantageusement perfluoré, c'est-à-dire qu'il est composé uniquement d'atomes de carbone et de fluor.

Il est de préférence choisi parmi les composés perfluorocarbonés, saturés, insaturés et/ou aromatiques, linéaires, ramifiés et/ou cycliques, ayant de 4 à 18 atomes de carbone.

Avantageusement, il est dénué de motif aromatique.

Selon une variante avantageuse, ce solvant fluorocarboné est acyclique ou mono- ou poly-cyclique et contient au moins 6 atomes de carbone.

A titre illustratif des composés fluorocarbonés convenant à l'invention peuvent notamment être cités les solvants décafluoropentane, tridécafluorohexane, pentafluorobutane, nonafluorohexane, heptafluorocyclopentane, tétradécafluorohexane, hexadécafluoroheptane, perfluorooctane, 1H-perfluorooctane, perfluorononane, perfluorodécaline et perfluorooctanol.

Plus préférentiellement, il dérive de la décaline.

Plus particulièrement, il s'agit de la perfluorodécaline.

Avantageusement, le solvant fluorocarboné ou mélange de solvants fluorocarbonés constitue de 20 à 90 %, et de préférence de 60 à 90 %, du volume total du milieu électrolyte de la batterie selon l'invention.

### AGENT SOLUBILISANT

L'agent solubilisant requis selon l'invention est déterminant pour accéder à un milieu électrolyte monophasique à partir d'un mélange contenant au moins un solvant liquide fluorocarboné et au moins un sel support, et qui sont naturellement dénués d'affinités l'un pour l'autre.

L'agent solubilisant conforme à l'invention permet notamment de solubiliser le sel support et de garantir à celui-ci un état soluté même en mélange avec le ou les solvants fluorocarbonés et carbonatés parallèlement requis selon l'invention.

Par ailleurs, il ne doit pas affecter la stabilité électrochimique ni la capacité solubilisante à l'égard de l'oxygène de ce milieu solvant fluorocarboné et dont il est recherché précisément à tirer profit selon l'invention.

L'agent solubilisant est un composé fluoré, distinct du solvant fluorcarboné conjointement considéré, et doté d'un caractère que l'on peut qualifier d'amphiphile, à l'image notamment des tensioactifs, mais possédant une polarité supérieure à celle du solvant fluorocarboné.

Il s'agit d'un composé hydrocarboné mono-, poly- ou per-fluoré, saturé, insaturé et/ou aromatique, linéaire, ramifié et/ou cyclique, ayant de 4 à 18 atomes de carbone, dont l'enchainement carboné est porteur d'au moins un motif terminal polaire et peut le cas échéant être interrompu par un ou plusieurs hétéroatomes notamment choisi(s) parmi les atomes d'oxygène et de soufre, et les radicaux -N(R¹)-, -B(R¹)- et -P(R¹R²)- avec R¹ et R², identiques ou différents, représentant un atome d'hydrogène ou un radical alkyle en C₁ à C₄.

Avantageusement, l'agent solubilisant répond à la formule générale (I) :

Z-[(C_{c}F_{2c})-(X)ₙ]_{q}-(CₑH₂ₑ)ₚ-Y (I)

dans laquelle :
- C_{c}F_{2c} représente un radical perfluorocarboné saturé, linéaire ou ramifié, avec c représentant un entier allant de 4 à 18,
- X est choisi parmi les atomes d'oxygène et de soufre, et les radicaux -N(R²)-, -B(R²)- et -P(R³R²)- avec R³ et R², identiques ou différents, représentant un atome d'hydrogène ou un radical alkyle en C₁ à C₄,
- n est égal à 0 ou 1,
- q est égal à zéro ou est un entier variant de 1 à 15 avec X, c et n pouvant posséder des définitions dans chacune des unités -[(C_{c}F_{2c})-(X)ₙ]-,
- CₑH₂ₑ représente un radical hydrocarboné saturé, linéaire ou ramifié, avec e représentant un entier allant de 1 à 12,
- p est égal à 0 ou 1,
- Z représente un atome d'hydrogène, de fluor ou un groupement hydroxyle,
- Y représente un groupement -OH, -OR¹, -OM, -NH₂, -NHR¹, -N(R¹)₂, -N(R¹)₃⁺, -COOH, -COOM, -COOR¹, -OCOR¹, -CN, -SO₃H, -SO₃M avec R¹ étant un radical alkyle en C₁ à C₄ et M un ion métallique, ou
- Y et Z sont liés l'un à l'autre pour former un motif polaire de type oxo, éther ou ester.

Avantageusement, cet agent solubilisant présente une partie polaire notamment au regard du fait qu'il possède à travers la définition de Y au moins un groupement polaire tel que défini ci-dessus.

C'est notamment de par la présence d'un tel motif, que l'agent solubilisant manifeste une affinité pour le ou les sels supports auxquels il est associé.

A l'inverse, c'est son squelette fluorocarboné qui lui procure une affinité pour le solvant fluorocarboné associé.

Dans la formule (I), q est de préférence égal à 1.

Dans la formule (I), n est de préférence égal à 0.

Dans la formule (I), p est de préférence égal à 1.

Dans la formule (I), c est de préférence compris de 4 à 8.

Dans la formule (I), e est de préférence compris de 1 à 4.

Avantageusement, le composé de formule (I) est saturé.

Selon une variante, le composé de formule (I) est linéaire et saturé.

En particulier, il est en C₇ à C₁₅.

De préférence, q est égal à 1, n est égal à 0 et p est égal à 1.

De préférence, c est compris de 4 à 8 et e est compris de 1 à 4.

Préférentiellement, Y est choisi parmi les groupements -OH, -OR¹,-OM, -COOM, -COOR¹, -OCOR¹, avec M et R¹ étant tels que définis ci-dessus.

Plus préférentiellement, Y est un groupement -OH.

Préférentiellement, Z est un atome de fluor.

Selon un mode de réalisation particulier, l'agent solubilisant répond à la formule (II) :

F-(C_{c}F_{2c})-(CₑH₂ₑ)-Y (II)

dans laquelle Y, c et e sont tels que définis ci-dessus.

De préférence, dans la formule (II), c est compris de 4 à 8.

De préférence, dans la formule (II), e est compris de 1 à 4.

De préférence, dans la formule (II), Y est un groupement -OH.

Selon un autre mode de réalisation particulier, l'agent solubilisant répond à la formule (III) :

F-(C_{c}F_{2c})-Y (III)

dans laquelle Y et c sont tels que définis ci-dessus.

Des composés spécifiques représentatifs de cette variante sont notamment les perfluoroalcanols et les perfluoroesters d'alkyle.

Par exemple, l'agent solubilisant est le perfluorooctanol.

D'une manière générale, la quantité en agent solubilisant est ajustée notamment en présence du solvant fluorocarboné et du sel support considérés conjointement pour accéder à un milieu électrolyte monophasique garant de la solubilité du sel et de l'obtention des propriétés de conductivité attendues.

En particulier, le solvant fluorocarboné et l'agent solubilisant peuvent être mis en oeuvre dans un rapport volumique ou massique solvant fluorocarboné/agent solubilisant compris entre 10/1 et 3/2, en particulier entre 6/1 et 2/1, notamment compris entre 5/1 et 3/1 et plus particulièrement d'environ 4/1.

L'obtention d'un milieu électrolyte monophasique conforme à l'invention peut être visualisée à l'oeil nu mais également être contrôlée par mesure de la conductivité du mélange liquide formé qui doit atteindre une valeur optimale. Un protocole de mesure approprié par spectroscopie d'impédance pour évaluer cette valeur est illustré dans les exemples ci-après.

Bien entendu, le choix de l'agent solubilisant est avantageusement effectué en considérant sa compatibilité physico-chimique avec le solvant fluorocarboné et le sel support devant y être dissout. Cette sélection relève clairement des compétences de l'homme du métier.

S'avèrent notamment compatibles des solvants fluorocarbonés et des agents solubilisant, possédant respectivement un squelette carboné saturé, acyclique ou cyclique, et dont les nombres de carbone respectifs diffèrent de moins de 5 atomes de carbone et de préférence de moins de 3 atomes de carbone.

Ainsi il peut être avantageux de considérer un agent solubilisant de type perfluoroalcanol acyclique lorsque le solvant est un perfluoroalcane en C₆ à C₁₂ tel que par exemple la perfluorodécaline.

Il peut être avantageux de les combiner dans un rapport volumique ou massique solvant fluorocarboné/agent solubilisant variant de 50/5 à 30/20, en particulier de 6/1 à 2/1, notamment de 5/1 à 3/1 et de préférence égal à environ 4/1.

A titre de couples solvant fluorocarboné/agent solubilisant convenant à l'invention peut tout particulièrement être cité le couple perfluorodécaline/perfluorooctanol.

Comme précisé ci-dessus l'électrolyte selon l'invention comprend de 10 à 60 % et de préférence de 5 à 25 % de son volume total en agent(s) solubilisant(s).

### SOLVANT CARBONATÉ

Un milieu solvant électrolyte selon l'invention contient en outre au moins un solvant carbonaté.

Cette famille de solvant est conventionnellement mise en oeuvre dans les milieux électrolytes. Ces solvants, dits encore de dissociation, permettent d'augmenter la conductivité ionique du milieu électrolyte les contenant, compte-tenu de leur fort pouvoir diélectrique.

A titre représentatif et non limitatif de ces solvants, peuvent notamment être cités le carbonate d'éthylène, le carbonate de propylène, le carbonate de diéthyle, le carbonate d'éthylméthyle, le carbonate de diméthyle et leurs mélanges.

Bien entendu, la quantité de ce type de solvant est ajustée pour ne pas porter préjudice au système monophasique du milieu électrolyte requis selon l'invention.

Avantageusement, le solvant carbonaté ou mélange de solvants carbonatés constitue de 10 à 20 % et de préférence de 10 à 15 % en volume du volume total du milieu électrolyte selon l'invention.

En particulier, le solvant fluorocarboné, l'agent solubilisant et le solvant carbonaté peuvent être mis en oeuvre avec de 50 à 70 % en volume de solvant fluorocarboné, pour 30 à 40 % en volume d'agent solubilisant et de 3 à 10 % en volume de solvant carbonaté, en proportionnalité volumique.

### SEL SUPPORT

Le sel support contenu dans le milieu électrolyte selon l'invention est un sel de métal alcalin ou alcalino-terreux et de préférence de lithium.

Il est avantageusement constitué par un sel comportant au moins le cation Li⁺. Le sel est, par exemple, choisi parmi LiClO₄, LiAsF₆, LiPF₆, LiBF₄, LiR_{F}SO₃, LiCH₃SO₃, LiN(R_{F}SO₂)₂, et LiC(R_{F}SO₂)₃, R_{F} étant choisi parmi un atome de fluor et un groupement perfluoroalkyle comportant entre 1 et 8 atomes de carbone.

La quantité en sel support dans l'électrolyte selon l'invention est ajustée pour optimiser la conductivité ionique de l'électrolyte. Pour des raisons évidentes cette quantité est donc susceptible de varier en fonction de la nature chimique du sel support considéré.

Toutefois, cette quantité varie généralement de 0,1 à 5 mol/L, notamment pour les sels de lithium.

A titre de milieux électrolytes particulièrement avantageux pour l'invention peuvent notamment être cités ceux comprenant au moins :
- la perfluorodécaline à titre de solvant fluorocarboné,
- le perfluoro-octanol à titre d'agent solubilisant, notamment dans un rapport volumique solvant fluorocarboné/agent solubilisant de 55/45,
- le LiTFSI à titre de sel support, notamment à une concentration molaire de 1 mol/L, et
- le carbonate de propylène à titre de solvant carbonaté, notamment à une concentration volumique de 9 %.

Selon une variante particulière, le milieu électrolyte selon l'invention peut être mis en oeuvre sous une forme gélifiée.

A cette fin, il est formulé dans une matrice polymérique.

Cette matrice peut être formée à partir d'au moins un composé choisi parmi les polyéthers, polyacrylamide, polycarbonate, polyéthersulfone et leurs copolymères.

Outre le milieu électrolyte défini ci-dessus, une batterie (ou accumulateur) métal-oxygène selon l'invention est formée d'au moins une cellule électrochimique constituée d'un séparateur imprégné du milieu électrolyte selon l'invention entre une électrode positive ou cathode et une électrode négative ou anode, un collecteur de courant connecté à la cathode, et un collecteur de courant connecté à l'anode.

Ainsi, la batterie selon l'invention comprend une électrode négative métallique et une électrode positive réductrice de l'oxygène.

De préférence :
- le matériau d'électrode(s) négative(s) est en lithium, aluminium ou en zinc, et
- le matériau d'électrode(s) positive(s) est en carbone, platine ou MnO₂.

L'anode et la cathode peuvent être déposées selon une technique usuelle sous la forme d'une couche active sur une feuille métallique constituant un collecteur de courant.

Le collecteur de courant connecté à l'électrode positive est en général en aluminium.

Le collecteur de courant connecté à l'électrode négative est en général en cuivre, en cuivre nickelé ou en aluminium.

Selon une variante préférée, la batterie selon l'invention est une batterie lithium-oxygène (Li/O₂).

### FIGURES

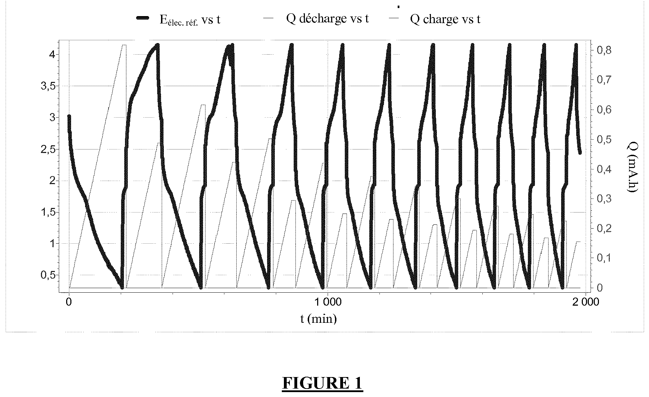

Figure 1 : Courbes de voltammétrie cyclique en solution de 09PFDOol (électrode de travail : 3 mm carbone vitreux, contre-électrode : fil de platine, électrode de référence Ag⁰/Ag⁺, 0,01 M AgNO₃/0,1 M TBAPF₆/CH₃CN fraichement préparée, E vs. Li⁺/Li⁰ = 3,53 V vs. Ag⁰/Ag⁺, 100 mV.s⁻¹).

### MATERIEL ET METHODES

Les mesures de conductivité ont été réalisées à l'aide d'un conductimètre thermostaté à 12 cellules MMultyConductimeter de chez MaterialsMates. La cellule de mesure est remplie avec 1 mL d'électrolyte, puis elle est connectée et posée dans un bain de sable thermostaté à 22 °C. Les mesures sont effectuées pendant 2 h.

Les mesures d'électrochimie en solution ont été effectuées dans une cellule électrochimique à 3 électrodes (électrode de travail : 3 mm carbone vitreux, contre-électrode : fil de platine, électrode de référence Ag⁰/Ag⁺, 0,01 M AgNO₃/0,1 M TBAPF₆/CH₃CN fraichement préparée, E vs. Li⁺/Li⁰ = 3,53 V vs. Ag⁰/Ag⁺, TBA = tétrabutyl ammonium).

Une électrode contenant 80% en masse de SuperP carbone conducteur électronique et 20 % en masse de liant PVDF (fluorure de polyvinylidène) est réalisée selon le protocole suivant.

400 mg de SuperP sont mélangés avec 950 mg d'une solution à 12 % en masse de PVDF dans la NMP (N-méthylpyrrolidinone), puis 6,15 g de NMP additionnelle sont ajoutés. Ce mélangé ainsi obtenu est dispersé au Dispermat à 2 000 rpm pendant 20 min puis à 5 000 rpm pendant 5 min. L'encre ainsi obtenue est enduite (1 = 200 µm) grâce à un banc d'enduction sur un feuillard d'aluminium puis séchée dans une étuve à 55 °C. L'électrode ainsi obtenue est découpée en pastille de 14 mm de diamètre et pressée à 10 tonnes avant d'être séchée sous vide pendant 48 h à 80 °C.

Une batterie utilisant l'électrode réalisée auparavant est assemblée en boite à gants avec une contre-électrode en lithium métal selon le protocole suivant.

L'électrode réalisée est empilée en vis-à-vis d'une électrode en lithium métal de 16 mm de diamètre, toutes deux séparées par une membrane à base de polyamide (Dupont). L'ensemble est ensuite imbibé de l'électrolyte étudié puis sertie dans une pile bouton en inox.

Le sel support est le LiTFSI commercialisé par Sigma Aldrich.

Différents tests de solubilité de LiTFSI ont été réalisés dans plusieurs mélanges selon l'invention et caractérisés par mesures de conductivité ionique, et/ou électrochimie en solution ou électrochimie en pile bouton.

### EXEMPLE 1 (TEMOIN)

2,13 g LiTFSI sont dissous dans 25 mL de perfluorodécaline:perfluoro octanol (4:1), ce mélange correspond à une concentration de sel dissous de 0,3 M (référence électrolyte : 03PFDOol).

### EXEMPLE 2

2,13 g LiTFSI sont dissous dans 25 mL de perfluorodécaline:perfluorooctanol:carbonate de diméthyle (4:1:0,1), ce mélange monophasique correspond à une concentration de sel dissous de 0,3 M (référence électrolyte : 06PFDOol).

### EXEMPLE 3

4,25 g LiTFSI sont dissous dans 25 mL de perfluorodécaline:perfluorooctanol:carbonate d'éthylène (3,5:1,35:0,15), ce mélange monophasique correspond à une concentration de sel dissous de 0,6 M (référence électrolyte : 07PFDOol).

### EXEMPLE 4

4,96 g LiTFSI sont dissous dans 25 mL de perfluorodécaline:perfluorooctanol:carbonate d'éthylène: carbonate de propylène (3,11:1,62:0,13:0,14), ce mélange correspond à une concentration de sel dissous de 0,7 M (référence électrolyte : 08PFDOol).

### EXEMPLE 5

7,15 g LiTFSI sont dissous dans 25 mL de perfluorodécaline:perfluorooctanol:carbonate de propylène (2,55:2:0,45), ce mélange correspond à une concentration de sel dissous de 1 M (référence électrolyte : 09PFDOol).

Les conductivités ioniques de l'ensemble des milieux électrolytes des exemples précédents ont été mesurées à température ambiante selon le protocole décrit précédemment et les résultats obtenus figurent dans le tableau 1 ci-après.

**Tableau 1**

| Exemple | Référence | Conductivité ionique (mS.cm⁻¹) |
|---|---|---|
| 1 (témoin) | 03 PFDOol | 3,3.10⁻³ |
| 2 | 06 PFDOol | 1,9.10⁻² |
| 3 | 07 PFDOol | 2,7.10⁻² |
| 4 | 08 PFDOol | 7,1.10⁻² |
| 5 | 09 PFDOol | 11,3.10⁻² |

On observe une augmentation significative de la conductivité ionique au fur à mesure que la solubilité des sels porteurs augmente par l'ajout de solvant compatibilisant. De plus, l'ajout de carbonate à hauteur de 3 % entre la solution 03PFDOol et la solution 06PFDOol permet de gagner une décade sur la conductivité ionique.

### EXEMPLE 6

La courbe de voltammétrie cyclique a été établie pour l'électrolyte exemplifié dans les conditions décrites précédemment.

Ainsi la figure 1 représente la courbe de voltamétrie cyclique de l'électrolyte de l'exemple 5. On observe sur la courbe de voltampérométrie cyclique une absence de pic de réduction et d'oxydation avec des courants de l'ordre du µA ce qui démontre une excellente stabilité de l'électrolyte sur une plage de tension allant de 0 à 5 V.

## Revendications

1. Batterie métal-oxygène comprenant, à titre d'électrolyte, un milieu électrolyte monophasique comprenant au moins :
- un sel support de métal alcalin ou alcalino-terreux, de préférence un sel de lithium,
- un solvant fluorocarboné possédant une solubilité pour l'oxygène au moins égale à 30 % v/v,
- de 10 à 60 % en volume d'au moins un agent solubilisant fluoré, distinct dudit solvant fluorocarboné, choisi parmi les composés hydrocarbonés mono-, poly- et per-fluorés, saturés, insaturés et/ou aromatiques, linéaires, ramifiés et/ou cycliques, ayant de 4 à 18 atomes de carbone, dont l'enchaînement carboné est porteur d'au moins un motif terminal polaire et peut être interrompu par un ou plusieurs hétéroatomes choisi(s) parmi les atomes d'oxygène et de soufre, et les radicaux -N(R¹)-, -B(R¹)- et -P(R¹R²)- avec R¹ et R², identiques ou différents, représentant un atome d'hydrogène ou un radical alkyle en C₁ à C₄, et
- un solvant carbonaté.

2. Batterie selon la revendication précédente dans laquelle le solvant fluorocarboné est choisi parmi les composés perfluorocarbonés, saturés, insaturés et/ou aromatiques, linéaires, ramifiés et/ou cycliques, ayant de 4 à 18 atomes de carbone.

3. Batterie selon la revendication 1 ou 2 dans laquelle le solvant fluorocarboné est choisi parmi les solvants décafluoropentane, tridécafluorohexane, pentafluorobutane, nonafluorohexane, heptafluorocyclopentane, tétradécafluorohexane, hexadécafluoroheptane, perfluorooctane, 1H-perfluorooctane, perfluorononane, perfluorodécaline et perfluorooctanol, et de préférence est la perfluorodécaline.

4. Batterie selon l'une quelconque des revendications précédentes dans laquelle l'agent solubilisant répond à la formule générale (I) :
Z-[(C_{c}F_{2c})-(X)ₙ]_{q}-(CₑH₂ₑ)ₚ-Y (I)
dans laquelle :
- C_{c}F_{2c} représente un radical perfluorocarboné saturé, linéaire ou ramifié, avec c représentant un entier allant de 4 à 18,
- X est choisi parmi les atomes d'oxygène et de soufre et les radicaux -N(R²)-, -B(R²)- et -P(R³R²)- avec R³ et R², identiques ou différents, représentant un atome d'hydrogène ou un radical alkyle en C₁ à C₄,
- n est égal à 0 ou 1,
- q est égal à zéro ou est un entier variant de 1 à 15 avec X, c et n pouvant posséder des définitions dans chacune des unités -[(C_{c}F_{2c})-(X)ₙ]-,
- CₑH₂ₑ représente un radical hydrocarboné saturé, linéaire ou ramifié, avec e représentant un entier allant de 1 à 12,
- p est égal à 0 ou 1,
- Z représente un atome d'hydrogène, de fluor ou un groupement hydroxyle,
- Y représente un groupement -OH, -OR¹, -OM, -NH₂, -NHR¹, -N(R¹)₂, -N(R¹)₃⁺, -COOH, -COOM, -COOR¹, -OCOR¹, -CN, -SO₃H, -SO₃M avec R¹ étant un radical alkyle en C₁ à C₄ et M un ion métallique, ou
- Y et Z sont liés l'un à l'autre pour former un motif polaire de type oxo, éther ou ester.

5. Batterie selon l'une quelconque des revendications précédentes dans laquelle l'agent solubilisant est choisi parmi les perfluoroalcanols et les perfluoroesters d'alkyles, et de préférence est le perfluorooctanol.

6. Batterie selon l'une quelconque des revendications précédentes dans laquelle le solvant fluorocarboné et l'agent solubilisant sont présents dans un rapport volumique variant de 50/5 à 30/20, en particulier de 6/1 à 2/1, notamment de 5/1 à 3/1 et de préférence égal à 4/1.

7. Batterie selon l'une quelconque des revendications précédentes comprenant au moins de la perfluorodécaline à titre de solvant fluorocarboné en association avec au moins du perfluorooctanol à titre d'agent solubilisant.

8. Batterie selon l'une quelconque des revendications précédentes comprenant à titre de solvant carbonaté au moins un composé choisi parmi le carbonate d'éthylène, le carbonate de propylène, le carbonate de diéthyle, le carbonate de diméthyle, le carbonate d'éthylméthyle et leurs mélanges.

9. Batterie selon l'une quelconque des revendications précédentes dans laquelle le solvant fluorocarboné, l'agent solubilisant et le solvant carbonaté sont mis en oeuvre avec de 50 à 70 % en volume de solvant fluorocarboné, pour 30 à 40 % en volume d'agent solubilisant et de 3 à 10 % en volume de solvant carbonaté, en proportionnalité volumique.

10. Batterie selon l'une quelconque des revendications précédentes comprenant à titre de sel de métal alcalin ou alcalino-terreux au moins un composé choisi parmi LiClO₄, LiAsF₆, LiPF₆, LiBF₄, LiR_{F}SO₃, LiCH₃SO₃, LiN(R_{F}SO₂)₂, et LiC(R_{F}SO₂)₃, R_{F} étant choisi parmi un atome de fluor et un groupement perfluoroalkyle comportant entre 1 et 8 atomes de carbone.

11. Batterie selon l'une quelconque des revendications précédentes **caractérisée en ce qu'**il s'agit d'une batterie lithium-oxygène.

12. Batterie selon l'une quelconque des revendications précédentes **caractérisée en ce qu'**elle comprend une électrode négative métallique et une électrode positive réductrice de l'oxygène.

## Patentansprüche

1. Metall-Sauerstoff-Batterie, umfassend als Elektrolyt ein einphasiges Elektrolytmedium, das mindestens Folgendes umfasst:
- ein Alkalimetall- oder Erdalkalimetall-Trägersalz, vorzugsweise ein Lithiumsalz,
- Fluorkohlenwasserstoff-Lösungsmittel mit einer Löslichkeit für Sauerstoff von mindestens 30 % v/v,
- 10 bis 60 Vol. -% mindestens eines fluorierten Solubilisierungsmittels, das von dem Fluorkohlenwasserstoff-Lösungsmittel verschieden ist und aus mono-, poly- und perfluorierten, gesättigten, ungesättigten und/oder aromatischen, linearen, verzweigten und/oder cyclischen Kohlenwasserstoffverbindungen mit 4 bis 18 Kohlenstoffatomen, deren Kohlenwasserstoffkette mindestens eine polare terminale Einheit trägt und durch ein oder mehrere Heteroatome, die aus Sauerstoff- und Schwefelatomen und den Resten -N(R¹)-, -B(R¹)- und -P(R¹R²)- ausgewählt sind, unterbrochen sein kann, ausgewählt ist, wobei R¹ und R² gleich oder verschieden sind und für ein Wasserstoffatom oder einen C₁- bis C₄-Alkylrest stehen, und
- ein Carbonat-Lösungsmittel.

2. Batterie nach dem vorhergehenden Anspruch, wobei das Fluorkohlenwasserstoff-Lösungsmittel aus gesättigten, ungesättigten und/oder aromatischen, linearen, verzweigten und/oder cyclischen, Perfluorkohlenwasserstoffverbindungen mit 4 bis 18 Kohlenstoffatomen ausgewählt ist.

3. Batterie nach Anspruch 1 oder 2, wobei das Fluorkohlenwasserstoff-Lösungsmittel aus den Lösungsmitteln Decafluorpentan, Tridecafluorhexan, Pentafluorbutan, Nonafluorhexan, Heptafluorcyclopentan, Tetradecafluorhexan, Hexadecafluorheptan, Perfluoroctan, 1H-Perfluoroctan, Perfluornonan, Perfluordecalin und Perfluoroctanol ausgewählt ist und vorzugsweise Perfluordecalin ist.

4. Batterie nach einem der vorhergehenden Ansprüche, wobei das Solubilisierungsmittel der allgemeinen Formel (I) entspricht:
Z-[(C_{c}F_{2c})-(X)ₙ]_{q}-(CₑH₂ₑ)ₚ-Y (I)
in der:
- C₂F_{2c} für einen gesättigten, linearen oder verzweigten Perfluorkohlenwasserstoffrest steht, wobei c für eine ganze Zahl im Bereich von 4 bis 18 steht,
- X aus Sauerstoff- und Schwefelatomen und den Resten -N(R²)-, -B(R²)- und -P(R³R²)- ausgewählt ist, wobei R³ und R² gleich oder verschieden sind und für ein Wasserstoffatom oder einen C₁- bis C₄-Alkylrest stehen,
- n gleich 0 oder 1 ist,
- q gleich null ist oder für eine ganze Zahl im Bereich von 1 bis 15 steht, wobei X, c und n in jeder der Einheiten -[(C_{c}F_{2c})-(X)ₙ]- Definitionen besitzen können,
- CₑH₂ₑ für einen gesättigten, linearen oder verzweigten Kohlenwasserstoffrest steht, wobei e für eine ganze Zahl im Bereich von 1 bis 12 steht,
- p gleich 0 oder 1 ist,
- Z für ein Wasserstoff- oder Fluoratom oder eine Hydroxylgruppe steht,
- Y für eine -OH-, -OR¹-, -OM-, -NH₂-, -NHR¹-, -N(R¹)₂-, -N(R¹)₃⁺-, -COOH-, -COOM-, -COOR¹-, -OCOR¹-, -CN-, -SO₃H- oder -SO₃M-Gruppe steht, wobei R¹ für einen C₁- bis C₄-Alkylrest steht und M für ein Metallion steht, oder
- Y und Z unter Bildung einer polaren Einheit vom Oxo-, Ether- oder Ester-Typ miteinander verbunden sind.

5. Batterie nach einem der vorhergehenden Ansprüche, wobei das Solubilisierungsmittel aus Perfluoralkanolen und Perfluoralkylestern ausgewählt ist und vorzugsweise Perfluoroctanol ist.

6. Batterie nach einem der vorhergehenden Ansprüche, wobei das Fluorkohlenwasserstoff-Lösungsmittel und das Solubilisierungsmittel in einem Volumenverhältnis im Bereich von 50/5 bis 30/20, insbesondere von 6/1 bis 2/1 und besonders von 5/1 bis 3/1 vorliegen und vorzugsweise gleich 4/1 ist.

7. Batterie nach einem der vorhergehenden Ansprüche, umfassend mindestens Perfluordecalin als Fluorkohlenwasserstoff-Lösungsmittel in Kombination mit mindestens Perfluoroctanol als Solubilisierungsmittel.

8. Batterie nach einem der vorhergehenden Ansprüche, umfassend als Carbonat-Lösungsmittel mindestens eine Verbindung, die aus Ethylencarbonat, Propylencarbonat, Diethylcarbonat, Dimethylcarbonat, Ethylmethylcarbonat und Mischungen davon ausgewählt ist.

9. Batterie nach einem der vorhergehenden Ansprüche, wobei das Fluorkohlenwasserstoff-Lösungsmittel, das Solubilisierungsmittel und das Carbonat-Lösungsmittel in Volumenanteilen von 50 bis 70 Vol.-% Fluorkohlenwasserstoff-Lösungsmittel auf 30 bis 40 Vol.-% Solubilisierungsmittel und 3 bis 10 Vol.-% Carbonat-Lösungsmittel verwendet werden.

10. Batterie nach einem der vorhergehenden Ansprüche, umfassend als Alkali- oder Erdalkalimetallsalz mindestens eine Verbindung, die aus LiClO₄, LiAsF₆, LiPF₆, LiBF₄, LiR_{F}SO₃, LiCH₃SO₃, LiN(R_{F}SO₂)₂ und LiC(R_{F}SO₂)₃ ausgewählt ist, wobei R_{F} aus einem Fluoratom und einer Perfluoralkylgruppe, die zwischen 1 und 8 Kohlenstoffatome umfasst, ausgewählt ist.

11. Batterie nach einem der vorhergehenden Ansprüche, **dadurch gekennzeichnet, dass** es sich um eine Lithium-Sauerstoff-Batterie handelt.

12. Batterie nach einem der vorhergehenden Ansprüche, **dadurch gekennzeichnet, dass** sie eine negative Metallelektrode und eine sauerstoffreduzierende positive Elektrode umfasst.

## Claims

1. Metal-oxygen battery comprising, as electrolyte, a single phase electrolyte medium comprising at least:
- an alkali metal or alkaline earth metal support salt, preferably a lithium salt,
- a fluorocarbon solvent having a solubility for oxygen of at least 30% v/v,
- from 10% to 60% by volume of at least one fluorinated solubilizing agent, distinct from said fluorocarbon solvent, chosen from mono-, poly- and perfluorinated, saturated, unsaturated and/or aromatic, linear, branched and/or cyclic hydrocarbon-based compounds, having from 4 to 18 carbon atoms, in which the carbon chain bears at least one polar terminal unit and may be interrupted by one or more heteroatoms chosen from oxygen and sulfur atoms, and the radicals -N(R¹)-, -B(R¹)- and -P(R¹R²)-, with R¹ and R², which are identical or different, representing a hydrogen atom or a C₁ to C₄ alkyl radical, and
- a carbonate solvent.

2. Battery according to the preceding claim, wherein the fluorocarbon solvent is chosen from saturated, unsaturated and/or aromatic, linear, branched and/or cyclic perfluorocarbonate compounds having from 4 to 18 carbon atoms.

3. Battery according to Claim 1 or 2, wherein the fluorocarbon solvent is chosen from decafluoropentane, tridecafluorohexane, pentafluorobutane, nonafluorohexane, heptafluorocyclopentane, tetradecafluorohexane, hexadecafluoroheptane, perfluorooctane, 1H-perfluorooctane, perfluorononane, perfluorodecalin and perfluorooctanol solvents, and is preferably perfluorodecalin.

4. Battery according to any one of the preceding claims, wherein the solubilizing agent corresponds to the general formula (I):
Z-[(C_{c}F_{2c})- (X)ₙ]_{q}-(CₑH₂ₑ)ₚ-Y (I)
in which:
- C_{c}F_{2c} represents a saturated, linear or branched perfluorocarbonate radical, with c representing an integer ranging from 4 to 18,
- X is chosen from oxygen and sulfur atoms and the radicals -N(R²)-, -B(R²)- and -P(R³R²)-, with R³ and R², which are identical or different, representing a hydrogen atom or a C₁ to C₄ alkyl radical,
- n is equal to 0 or 1,
- q is equal to zero or is an integer varying from 1 to 15, with X, c and n possibly having definitions in each of the units -[(C_{c}F_{2c})-(X)ₙ]-,
- CₑH₂ₑ represents a saturated, linear or branched hydrocarbon-based radical, with e representing an integer ranging from 1 to 12,
- p is equal to 0 or 1,
- Z represents a hydrogen or fluorine atom or a hydroxyl group,
- Y represents an -OH, -OR¹, -OM, -NH₂, -NHR¹, -N(R¹)₂, -N(R¹)₃⁺, -COOH, -COOM, -COOR¹, -OCOR¹, -CN, -SO₃H, -SO₃M group, with R¹ being a C₁ to C₄ alkyl radical and M being a metal ion, or
- Y and Z are linked to one another to form a polar unit of the oxo, ether or ester type.

5. Battery according to any one of the preceding claims, wherein the solubilizing agent is chosen from perfluoroalkanols and alkyl perfluoroesters, and is preferably perfluorooctanol.

6. Battery according to any one of the preceding claims, wherein the fluorocarbon solvent and the solubilizing agent are present in a ratio by volume which varies from 50/5 to 30/20, in particular from 6/1 to 2/1, especially from 5/1 to 3/1, and is preferably equal to 4/1.

7. Battery according to any one of the preceding claims, comprising at least perfluorodecalin as fluorocarbon solvent in combination with at least perfluorooctanol as solubilizing agent.

8. Battery according to any one of the preceding claims, comprising, as carbonate solvent, at least one compound chosen from ethylene carbonate, propylene carbonate, diethyl carbonate, dimethyl carbonate, ethyl methyl carbonate, and mixtures thereof.

9. Battery according to any one of the preceding claims, wherein the fluorocarbon solvent, the solubilizing agent and the carbonate solvent are used with 50% to 70% by volume of fluorocarbon solvent per 30% to 40% by volume of solubilizing agent and 3% to 10% by volume of carbonate solvent, in volume proportionality.

10. Battery according to any one of the preceding claims, comprising, as alkali metal or alkaline earth metal salt, at least one compound chosen from LiClO₄, LiAsF₆, LiPF₆, LiBF₄, LiR_{F}SO₃, LiCH₃SO₃, LiN(R_{F}SO₂)₂, and LiC(R_{F}SO₂)₃, R_{F} being chosen from a fluorine atom and a perfluoroalkyl group comprising between 1 and 8 carbon atoms.

11. Battery according to any one of the preceding claims, **characterized in that** it is a lithium-oxygen battery.

12. Battery according to any of the preceding claims, **characterized in that** it comprises a metal negative electrode and an oxygen-reducing positive electrode.
